# EUROPEAN PATENT APPLICATION

(11) **EP 4 253 904 A1**
(43) Date of publication of application: **04.10.2023**
(21) Application number: 21898792.3
(22) Date of filing: 22.10.2021
(51) Int. Cl.: G01B 21/16

(54) **SYSTEM FOR MEASURING THE MOVEMENT OF OBJECTS**

(30) Priority: 26.11.2020 RU 2020138784
(71) Applicant: Medvedeva, Marina Vladimirovna, Voskresensk, 140200 (RU); Utkin, Konstantin Borisovich, St.Petersburg 195274 (RU)
(72) Inventor: Medvedeva, Marina Vladimirovna, Voskresensk, 140200 (RU); Utkin, Konstantin Borisovich, St.Petersburg 195274 (RU)
(74) Representative: Caldon, Giuliano
(86) International application number: PCT/RU2021/050350
(87) International publication number: WO 2022/115000

(57) **Abstract**

The system for measuring the movement of objects consists of a transducer mounted on a measurement object, signal sources arranged near the path of movement of the objects, which send a signal to a moving object having a transducer, receive an output signal on the position of the signal sources by means of the transducer, wherein the system for measuring is configured to take into account the nonlinearity of the transducer in the form of random or systematic errors, repeatability and hysteresis when measuring the coordinate of the signal source by repeatedly measuring the position of the object from different points of the position of the transducer relative to the signal source and to statistically process the obtained values, and/or to take into account the environmental conditions and/or distance to the signal source. The technical result of the claimed invention consists in improving the accuracy of determining the position of an object.

## Description

### Field of the invention

The invention relates to measuring equipment for determining the movement of objects and can be used in construction, metallurgy, warehouse logistics, marine logistics, production automation and energy industry.

### Background of the invention

A system for measuring the movement of an object (RU 2623829 C1, (Medvedeva Marina Vladimirovna et al.), 29.06.2017), which consists of a transducer (T) mounted on a measurement object, signal sources (SS) arranged along the path of movement of the object and a data processing algorithm, is known in the art. In this case, magnetic markers or radio frequency markers, which can be unique, i.e. including more than one magnet or radio frequency tag with a particular distance between each other, can be used as signal sources. In this case, the system is configured to calculate the coordinates of the markers, as well as to store in memory the mark-up (coordinates) of each signal source with high accuracy, which allows the system to determine its absolute coordinate when resetting the power. The disadvantage of said system is the lack of ability to take into account additional information, such as nonlinearities of transducer characteristics by repeatedly measuring the position of an object and mathematical averaging, environmental conditions (temperature, humidity, and the like) and distances to signal sources, which reduces the accuracy of determining the movement of the object.

A system for measuring the movement of an object (US6351117B1, (BALLUFF INC.), 26.02.2002), in which a microprocessor takes into account nonlinearities of transducer characteristics by using correction factors, is known in the art. The disadvantages of said system are that nonlinearity is taken into account by using correction factors stored in non-volatile memory, which complicates the system for measuring, as well as the fact that said system for measuring movement does not take into account environmental conditions (temperature, humidity and the like) and distances to signal sources, which reduces the accuracy of determining the movement of an object.

The purpose of the claimed invention is to develop a system for measuring the movement of objects that allows to determine the position of an object with high accuracy.

### Summary of the invention

The technical result of the claimed invention consists in improving the accuracy of determining the position of an object due to the fact that the system for measuring is configured to take into account additional information, such as nonlinearities of transducer characteristics (such as random or systematic errors, repeatability and hysteresis) by repeatedly measuring the position of an object from different points of the position of the transducer relative to the signal source and to statistically process the obtained values (including mathematical averaging), environmental conditions (temperature, humidity and the like) and/or distance to the signal source.

The technical result is achieved by the fact that the system for measuring the movement of objects consists of a transducer mounted on a measurement object, signal sources arranged near the path of movement of the objects, which direct the signal to the moving object having a transducer, receive by means of the transducer the output signal on the position of the signal sources, which allows to determine the position of the object. In addition, the system for measuring is configured to take into account nonlinearities of transducer characteristics (such as random or systematic errors, repeatability and hysteresis) by repeatedly measuring the position of an object from different points of the position of the transducer relative to the signal source and to statistically process the obtained values, and/or to take into account environmental conditions and/or distances to the signal source.

In addition, the claimed system for measuring the movement of objects is configured to take into account environmental conditions, i.e. environmental factors (temperature, humidity, etc.) affecting the characteristics of interaction between the signal source and the transducer, and/or distances to the signal source.

In addition, in the claimed system for measuring the movement of objects, magnetic markers, radio frequency tags, light sources, heat sources, radiation sources of any kind, kinetic energy sources, pressure sources, ultrasonic waves, material having inductive and/or capacitive physical properties are used as signal sources.

Signal sources can be designed to be universal, i.e. signals received by the transducer from signal sources differ from each other only by coordinate, and/or to be unique, i.e. signals received by the transducer from signal sources differ from each other not only by coordinate, but also by additional unique (what distinguishes one tag from another) information. In the simplest case, information is meant to be, for example, an identification number of a radio tag, or a signature of a magnetic mark-up (a signature is a set of unique distances between two or more universal signal sources that simultaneously enter the range of sensitivity of the transducer).

For example, universal magnetic or radio frequency markers include one magnet or radio frequency tag from a group of radio frequency tags with the same identification code, respectively, and unique magnetic or radio frequency markers include more than one magnet with a certain distance between each other or a radio frequency tag from a group of radio frequency tags with different identification codes.

In addition, in the claimed system for measuring the movement of objects, magnetostrictive transducers, magnetic energy transducers (Hall sensors), photoelectric transducers, inductive and capacitive transducers, radio frequency transducers (radio frequency antennas, reading/recording heads, radio frequency signal processing units), pressure transducers, ultrasonic transducers, radiation energy transducers, kinetic energy transducers are used as transducers.

In addition to determining the coordinate of a signal source in the range of sensitivity, the transducer can identify (read) a signal source, i.e. determine the signature of universal signal sources or obtain information about a unique signal source. The information of unique signal sources may have different interpretations, depending on the type of signal source. For example, for a radio tag, the information is its identification number. For unique magnetic markers, the information is its signature.

Radio frequency transducers allow to determine the coordinate of a signal source (including, relative to itself) and its number when using a radio frequency tag from a group of radio frequency tags with different identification codes/individual codes (to uniquely identify the signal source).

A distinctive feature of the above types of transducers used in the solution is the ability to measure the coordinate of more than one signal source. This allows to determine the coordinates of a signal source entering the range of sensitivity of the transducer during the movement of the object in space, which allows the system to build a route of the signal sources to determine the position of the object in space based on certain coordinates of the signal sources. By knowing the initial coordinate of the object (for example, zero), the system allows to automatically determine the coordinates of all subsequent signal sources in space. To this end, the transducer measures the coordinates of one or more signal source(s) within its range of sensitivity at the initial position of the object. When an object moves, the system calculates its coordinate by means of relative movement of the transducer and the signal source (with the signal source being stationary), within the range of sensitivity of the transducer. When a new signal source enters the range of sensitivity of the transducer, the system, knowing the current coordinate of the object, calculates the coordinate of the new signal source. The process keeps repeating when the object moves and new signal sources enter the range of sensitivity of the transducer. In this way, the system can determine the coordinate of an object based on subsequent signal sources that enter the range of sensitivity of the transducer.

Having its coordinate data, the system calculates the coordinate of signal sources entering the range of sensitivity of the transducer and builds a route of signal sources to determine the coordinate of the object relative to this route. This property of the system is called adaptivity: the ability of the system to build the spatial arrangement of arbitrarily arranged signal sources.

Thus, the claimed invention implements an adaptive principle of building a route: the transducer determines the coordinates of universal and/or unique signal sources. In this case, the transducer calculates the coordinates of one or more signal sources in space relative to itself (local coordinate), after which the system builds a spatial route of universal and/or unique signal sources. Based on the built route, the system determines its position in space.

Measuring the movement of an object/system can be performed on the unique route sections, namely the route sections where universal signal sources are located at different distances from each other (preserving the uniqueness of the signature) and/or where unique signal sources are located at any distance from each other, including the same distance from each other, and on incremental sections, namely the sections where the distance between all universal signal sources is constant (there is no unique arrangement of universal signal sources).

The system can simultaneously calculate the coordinates of the signal sources and the object, i.e. allows to locate or track the movement of the latter.

### Brief description of the drawings

Fig. 1 shows an example of a system for measuring the movement of objects where the transducer is a magnetostrictive transducer, and the signal source is permanent magnets.

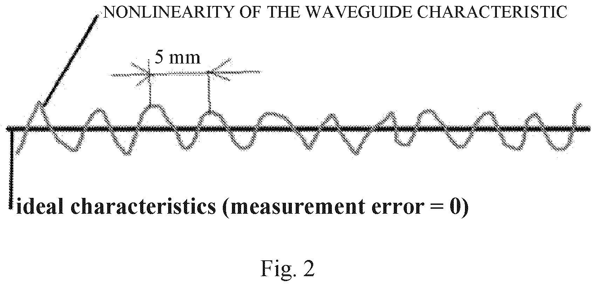

Fig. 2 shows an example of magnetic markers.
Fig. 3 shows the nonlinearity of the waveguide characteristic.

### Implementation of the invention

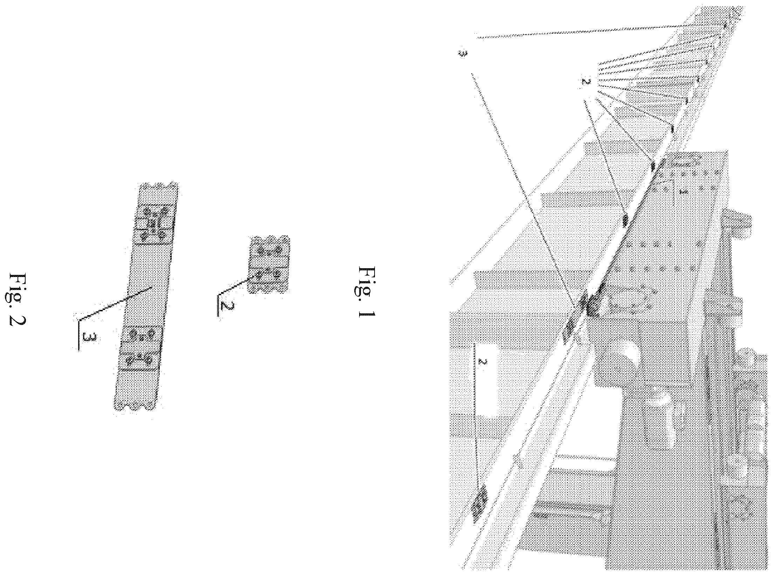

Fig. 1 shows an example of a system for measuring the movement of objects, in which a transducer, which is a magnetostrictive linear movement transducer (1), is mounted on the measurement object, and signal sources, which are magnetic markers (2, 3) comprising permanent magnets, are arranged near the path of movement of the object. The electrical pulse generated inside the transducer interacts with the magnetic field of the magnets, producing a magnetostrictive torsion wave in the waveguide, which propagates at supersonic speed. The constituent component of the torsion wave is converted into an electrical signal. The movement transducer tracks its absolute movement relative to the stationary magnets, starting from the initial point.

That being said, the mentioned example is not intended to limit the scope of the claims, and those skilled in the art would appreciate that the following can be used as a movement transducer: magnetic energy transducers (Hall sensors), photoelectric transducers, inductive and capacitive transducers, radio frequency transducers (radio frequency antennas, reading/recording heads, radio frequency signal processing units), pressure transducers, ultrasonic transducers, radiation energy transducers, kinetic energy transducers, while the following can be used as signal sources: radio frequency markers, light sources, heat sources, radiation sources of any kind, kinetic energy sources, pressure sources, ultrasonic waves, material having inductive and/or capacitive physical properties.

Magnetic and radio frequency markers can be universal, namely incremental (2), i.e. comprise one magnet or radio frequency tag from a group of radio frequency tags without a unique identification code, and/or unique, namely interval (3), i.e. comprise more than one magnet or radio frequency tag from a group of radio frequency tags with a unique identification code.

The system stores in memory the mark-up (coordinates) of each signal source with high accuracy, which allows the system to determine its absolute coordinate, even after a power reset, thanks to the information about the coordinates of each signal source stored in memory. The system for measuring the movement of objects is configured to calculate the coordinates of signal sources even when the signal sources change their position, to perform continuous repeated measurement of the coordinates of the same signal source from different points of the position of the object/transducer to obtain greater measurement accuracy, and/or to determine the distance to the signal source.

The system for measuring movement increases the accuracy of its position relative to the stationary signal sources by repeatedly measuring the coordinates of the signal source from different points of the position of the transducer relative to the signal source and by statistically processing the obtained values, as well as by taking into account additional information, such as nonlinearity of transducer characteristics (random or systematic errors, repeatability and hysteresis), in more detail (see below for details), the environmental factors that affect the characteristics of interaction between the signal source and the transducer and/or distance to signal sources.

Taking into account the environmental conditions allows to improve the accuracy of determining signal sources used in the system (for example, magnetic, radio frequency markers).

It is suggested to substantially reduce the influence of the nonlinearity of the waveguide characteristic by "averaging" the characteristic itself. The period of the sinusoid of the nonlinearity of the characteristic is approximately 5 mm (a process value). As shown in Fig. 3. Since the length of the transducer (i.e. the waveguide) is substantially greater than 5 mm, for example, 2500 mm, when the object moves and when repeatedly measuring the position of the object, the influence of nonlinearity of the waveguide characteristic can be substantially reduced by statistically processing the obtained values.

Thus, taking into account additional information allows the system for measuring the movement of objects to improve the accuracy of determining the position of an object.

## Claims

1. A system for measuring the movement of objects consisting of a transducer mounted on a measurement object, signal sources arranged near the path of movement of the objects, which send a signal to a moving object having a transducer, an output signal about the position of the signal sources is received by means of the transducer, which allows to determine the position of the object, wherein the system for measuring is configured to take into account the nonlinearities of the transducer in the form of random or systematic errors, repeatability and hysteresis when measuring the coordinate of the signal source by repeatedly measuring the position of the object from different points of the position of the transducer relative to the signal source and to statistically process the obtained values, and/or to take into account the environmental conditions and/or distance to the signal source.

2. The system for measuring the movement of objects as claimed in claim 1, wherein magnetic markers, radio frequency markers, light sources, heat sources, radiation sources of any kind, kinetic energy sources, pressure sources, ultrasonic waves, material having inductive and/or capacitive physical properties are used as signal sources.

3. The system for measuring the movement of objects as claimed in claim 1, wherein the signal sources are designed to be universal, i.e. to provide for transmission of signals that differ from each other only by the coordinate of the signal source to the transducer, and/or to be unique, i.e. to provide for transmission of signals that differ from each other not only by the coordinate of the signal source to the transducer.

4. The system for measuring the movement of objects as claimed in claim 1, wherein magnetostrictive transducers, magnetic energy transducers, photoelectric transducers, inductive and capacitive transducers, radio frequency transducers, pressure transducers, ultrasonic transducers, radiation energy transducers, kinetic energy transducers are used as transducers.
